Europäisches Patentamt

European Patent Office

Office européen des brevets

(11) Veröffentlichungsnummer: **0 505 743 A2**

# EUROPÄISCHE PATENTANMELDUNG

(21) Anmeldenummer: **92103122.5**

(51) Int. Cl.⁵: **B62B 3/10**

(22) Anmeldetag: **25.02.92**

(30) Priorität: **28.02.91 DE 4106332**

(43) Veröffentlichungstag der Anmeldung:
**30.09.92 Patentblatt 92/40**

(84) Benannte Vertragsstaaten:
**DE FR GB**

(71) Anmelder: **Wanzl GmbH & Co.**
**Entwicklungs-KG**
**Postfach 11 29**
**W-8874 Leipheim(DE)**

(72) Erfinder: **Eberlein, Herbert**
**Beethovenstrasse 8**
**W-8871 Bubesheim(DE)**
Erfinder: **Wanzl, Rudolf**
**Sonnenweg 8**
**W-8874 Leipheim(DE)**

(54) **Einrichtung zum Einkaufen von Ware in Selbstbedienungsgeschäften.**

(57) Die Erfindung betrifft eine Einrichtung zum Einkaufen von Ware in Selbstbedienungsgeschäften, bestehend aus einem mit mindestens einem Korb (5) ausgestatteten Einkaufswagen (1) und aus wenigstens einem Tragbehälter (18), der dem Kunden gehört, und den der Kunde zum Einkaufen mitbringt, am Einkaufswagen (1) bevorzugt in Nichtgebrauchslage abstellt und nach dem Einkaufen mit Ware gefüllt nach Hause nimmt. Die Erfindung schlägt vor, daß durch einen Teil des oberen Korbrandes (6) ein Abstellbereich (28) für wenigstens einen Tragbehälter (18) gebildet ist. Damit der wenigstens eine Tragbehälter (18) auf dem oberen Korbrand (6) verschiebesicher abgestellt werden kann, sind Anschlagmittel (17) entweder am Korb (5) und/oder am wenigstens einen Tragbehälter (18) vorgesehen. Durch die vorgeschlagenen Maßnahmen ist es möglich, den wenigstens einen Tragbehälter (18) nach dem Abrechnen der Ware an der Kasse, auf dem oberen Korbrand (6) abgestellt, mit der eingekauften Ware zu füllen, so daß der wenigstens eine Tragbehälter (18) mit dem Einkaufswagen (1) sicher zum Auto transportiert werden kann.

Fig. 1

EP 0 505 743 A2

Die Erfindung betrifft eine Einrichtung zum Einkaufen von Ware in Selbstbedienungsgeschäften, bestehend aus einem mit mindestens einem Korb ausgestatteten Einkaufswagen und aus wenigstens einem Tragbehälter, der dem Kunden gehört, und den der Kunde zum Einkaufen mitbringt, am Einkaufswagen bevorzugt in Nichtgebrauchslage abstellt und nach dem Einkaufen mit Ware gefüllt nach Hause nimmt und wobei am Einkaufswagen ein Abstellbereich zum Abstellen und Transportieren des wenigstens einen, nach dem Einkaufsvorgang mit Ware gefüllten Tragbehälters vorgesehen ist.

Seit einiger Zeit werden faltbare, aus Kunststoff bestehende Tragbehälter angeboten, die sich auch zum Transportieren von Einkaufsgut eignen. Diese Tragbehälter werden zum Einkaufen mitgenommen und nach dem Abrechnen an der Kasse mit der eingekauften Ware gefüllt, anschließend meist in den Korb oder auf den Bodenrost des Einkaufswagens gestellt und mit dem Einkaufswagen zum Auto gefahren.

Es erweist sich aus ergonomischen Gründen als nachteilig, daß die gefüllten Tragbehälter, will man diese nach erfolgtem Einkaufsvorgang im Auto abstellen, entweder aus dem Korb herausgehoben, oder vom unter dem Korb befindlichen Bodenrost hervorgeholt und angehoben werden müssen. Bei der Entnahme aus dem Korb besteht die Gefahr, daß man sich die Finger zwischen den Gitterwänden des Korbes und zwischen den Wänden des Tragbehälters einklemmen und sich verletzen kann. Beim Hervorholen eines Tragbehälters vom Bodenrost entstehen Belastungen, die sich schädlich auf die Wirbelsäule des Menschen auswirken können. Diese Gefahr ist besonders bei weiblichen Personen nicht zu unterschätzen.

Die Aufgabe der Erfindung besteht darin, eine Einrichtung der gattungsgemäßen Art unter Wahrung eines geringen Kostenaufwandes so weiterzuentwickeln, daß die geschilderten Nachteile vermieden werden. Mit der zu schaffenden Einrichtung soll ferner der Transport des oder der mit Ware gefüllten Tragbehälter auf bequeme und sichere Weise möglich sein.

Die Aufgabe ist erfindungsgemäß dadurch gelöst, daß der Abstellbereich durch einen Teil des oberen Korbrandes gebildet ist und daß Anschlagmittel entweder am Korb und/oder am wenigstens einen Tragbehälter zum verschiebesicheren Abstellen des wenigstens einen Tragbehälters vorgesehen sind.

Ein erster wesentlicher Vorteil der Erfindung besteht darin, daß der leere Tragbehälter auf den Korbrand gestellt und anschließend mit Ware gefüllt wird. Dies kann ohne Bücken geschehen. Der so plazierte wenigstens eine Tragbehälter wird mit dem Einkaufswagen zum Auto gefahren und vom höher gelegenen Korbrand in den tiefergelegenen Kofferraum mühelos herabgehoben. Ein anstrengendes Anheben des Tragbehälters entfällt. Die körperliche Belastung ist gering.

Ein zweiter Vorteil ist darin erkennbar, daß durch das Anordnen von Anschlagmitteln am Korb und/oder am Tragbehälter ein sicheres Arretieren des Tragbehälters am ansonsten glatten Korbrand garantiert ist. Obwohl sich der wenigstens eine Tragbehälter auf dem Korbrand befindet, kann er beim Fahren mit dem Einkaufswagen nicht herabstürzen.

Die vorgesehenen erfinderischen Maßnahmen lassen sich zudem äußerst kostengünstig durchführen. So können an den Tragbehältern als Anschlagmittel wirkende Erhebungen oder Vertiefungen bereits beim Spritzvorgang der gewöhnlich aus Kunststoff bestehenden Tragbehälter berücksichtigt werden. Es ist zum Herstellen der Anschlagmittel kein weiterer Arbeitsgang, höchstens aber ein geringer Materialmehrbedarf erforderlich, der aus der Sicht der Herstellkosten unbedeutend bleibt. Ebenso ist es relativ einfach, beispielsweise an der Stirnwand des Korbes ein Anschlagmittel in Form eines kleinen schwenkbaren Bügels vorzusehen, der im Bedarfsfalle einfach nach oben geklappt wird, um unter Abstützung an der Stirnwand als Anschlag für den oder die Tragbehälter zu wirken.

Die Erfindung wird anhand einiger Ausführungsbeispiele näher erläutert. Es zeigt

Fig. 1    einen Einkaufswagen in Seitenansicht mit zwei auf dem oberen Korbrand abgestellten Tragbehältern;

Fig. 2    ebenfalls einen in Seitenansicht dargestellten Einkaufswagen mit einem Fach zur Aufnahme von wenigstens einem Tragbehälter

Fig. 3    einen Einkaufswagen mit hochklappbarem Korb, der ein Fach sowie Anschlagmittel aufweist;

Fig. 4    in räumlicher Darstellung einen Tragbehälter, dessen Anschlagmittel durch fußartige Vorsprünge gebildet sind;

Fig. 5    einen Tragbehälter, dessen Anschlagmittel durch Vertiefungen gebildet sind, die sich in den Wänden befinden;

Fig. 6    in einer Draufsicht einen Einkaufswagen mit zwei auf dem Korbrand abgestellten Tragbehältern, deren Anschlagmittel aus Vorsprüngen bestehen;

Fig. 7    mit Blick auf die Stirnseite des Korbes eines Einkaufswagens, einen aufgesetzten Tragbehälter, dessen Anschlagmittel durch Vertiefungen gebildet sind sowie

Fig. 8    ebenfalls mit Blick auf die Stirnseite des Korbes eines Einkaufswagens einen aufgesetzten Tragbehälter, dessen Vorsprünge um je eine horizontale Achse verschwenkbar angeordnet sind.

Die Erfindung schließt alle Einkaufswagen 1 ein, die wenigstens einen Korb 5 zur Aufnahme der einzukaufenden Ware aufweisen. Die Einkaufswagen 1 können gemäß beliebiger Ausführungsformen mit zusätzlichen, zum Stand der Technik zählenden Ablagen, beispielsweise für Getränkekisten, zerbrechliches oder empfindliches Gut u. dgl. ausgestattet sein. Die Körbe 5 der Einkaufswagen 1 können ortsfest, abnehmbar oder verschwenkbar am Fahrgestell 2 angeordnet sein. Auch zählen Kindersitzeinrichtungen dazu. Ebenso sollten oder müssen sich die Einkaufswagen 1 in bekannter Weise platzsparend ineinanderschieben lassen.

Die Erfindung umfaßt auch alle Arten von Tragbehältern 18, die sich in bevorzugter Weise platzsparend in eine Nichtgebrauchslage zusammenfalten und sich aus dieser wieder zurück in eine Gebrauchslage entfalten lassen. Mit umfaßt sind z.B. auch einstückige Tragbehälter, die vor dem Einkaufen am Einkaufswagen 1 bevorzugt so abgestellt werden, beispielsweise mit der Öffnung nach unten, daß sie sich nicht mit Ware beladen lassen. Ein Einkaufswagen 1 und wenigstens ein Tragbehälter 18 bilden die Einrichtung zum Einkaufen von Ware in Selbstbedienungsgeschäften.

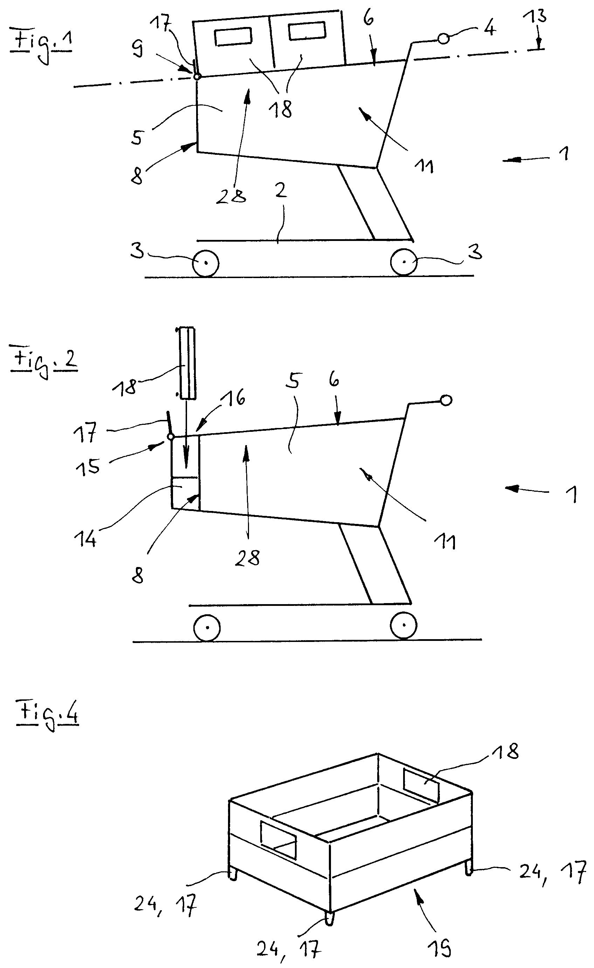

Der in Fig. 1 dargestellte Einkaufswagen 1 weist ein Fahrgestell 2 mit wenigstens drei, gewöhnlich mit vier Rollen 3 auf. Das Fahrgestell 2 trägt einen Korb 5. Am rückwärtigen Ende des Einkaufswagens 1 befindet sich eine Schiebeeinrichtung 4. Der obere Korbrand 6 ist in Schieberichtung bevorzugt geneigt angeordnet. Der obere Korbrand 6 kann aber auch horizontal angeordnet sein. Welche Lage der obere Korbrand 6 einnimmt, hängt in bekannter Weise davon ab, ob beim Stapeln mehrere Einkaufswagen 1, deren Körbe 5 ineinandergeschoben, oder deren Körbe 5 vor dem Stapelvorgang hochgeschwenkt werden müssen. Bei beiden Korbarten befindet sich z.B. an der oberen Begrenzung 9 der Stirnseite 8 des Korbes 5 wenigstens ein um eine horizontale Achse begrenzt verschenkbar gelagerter Bügel, der unter Abstützung an der Stirnseite ein Anschlagmittel 17 für wenigstens einen Tragbehälter 18 bildet. Im Beispiel sind zwei in Gebrauchslage befindliche Tragbehälter 18 auf einem Teil des oberen, in diesem Falle in Schieberichtung geneigten Korbrandes 6 abgestellt. Dieser Teil des oberen Korbrandes 6 bildet, wie auch bei den nachfolgenden Ausführungsbeispielen, einen Abstellbereich 28 für wenigstens einen Tragbehälter 18. Dadurch, daß vom wenigstens einen Tragbehälter nur ein Teil des oberen Korbrandes beansprucht wird, bleibt gewöhnlich ein Zugriff zum Korbinneren erhalten. Auch kann der restliche zugängliche Raum des Korbes für eine bekannte Kindersitzeinrichtung genutzt werden. Die Tragbehälter 18 stützen sich in Schieberichtung am Anschlagmittel 17 des Korbes 5 ab. Anstelle eines begrenzt drehbeweglichen Anschlagmittels 17 kann auch wenigstens ein ortsfest an der Stirnseite 8 des Korbes 5 angeordnetes Anschlagmittel 17 vorgesehen sein, sofern es beim platzsparenden Ineinanderschieben mehrerer Einkauswagen 1 nicht hinderlich ist. Welches Anschlagmittel 17 letztendlich zu wählen ist, richtet sich insbesondere nach der Gestalt und Anordnung des Korbes 5. Die Wahl und nähere Gestaltung mag der Fachmann bestimmen. Bei allen infragekommenden Ausführungsbeispielen jedenfalls ragt des stirnseitig vorgesehene Anschlagmittel 17 über die durch den oberen Korbrand 6 gebildete Ebene 13 (strichpunktiert gezeichnet) hinaus.

Der in Fig. 2 dargestellte Einkaufswagen 1 entspricht dem in Fig. 1 gezeigten Einkaufswagen 1. Zusätzlich weist der Einkaufswagen 1 ein Fach 14 auf, das an der Stirnseite 8 des Korbes 5 vorgesehen ist. Das Fach 14 weist eine nach oben oder zur Seite gerichtete Öffnung 16 auf. Im Beispiel befindet sich die Öffnung 16 oben. In der Zeichnung ist ein Tragbehälter 18 in zusammengeklappter Lage eingezeichnet. Die Zeichnung zeigt, daß der Tragbehälter 18 in Nichtgebrauchslage von ober her in das Fach 14 eingesetzt werden kann, siehe Pfeil. Das Fach 14 kann so breit sein, daß z.B. auch zwei zusammengeklappte Tragbehälter 18 einsetzbar sind. Beim gezeigten Ausführungsbeispiel ist oben an der in Schieberichtung des Einkaufswagen 1 betrachtet vordersten Begrenzung 15 des Faches 14 entweder wieder ein um eine horizontale Achse verschwenkbares oder starr angeordnetes Anschlagmittel 17 vorgesehen.

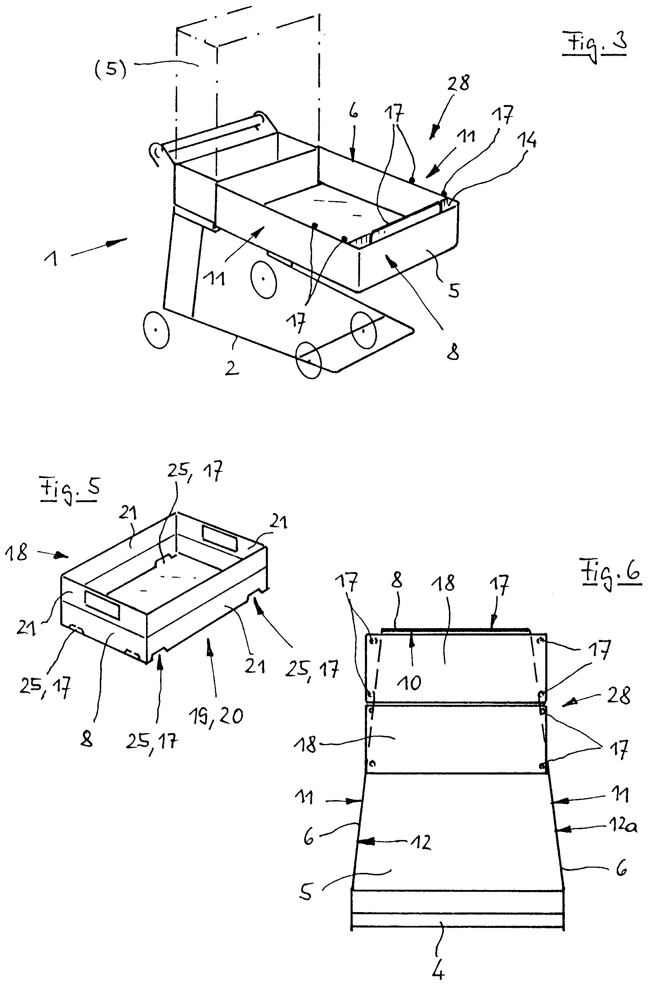

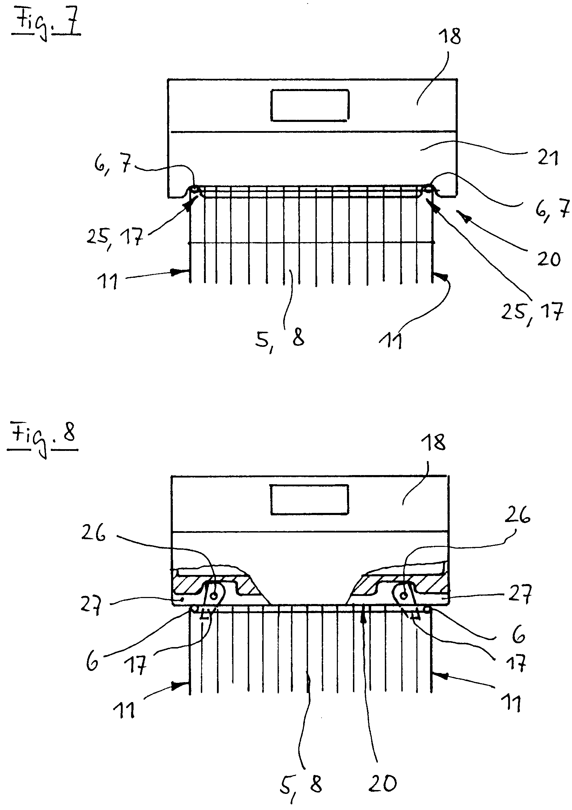

Während gemäß den Fig. 1 und 2 jeweils ein Einkaufswagen 1 mit ortsfest auf dem Fahrgestell 2 angeordnetem Korb 5 dargestellt ist, zeigt Fig. 3, siehe weiteres Blatt der Zeichnung, einen bekannten Einkaufswagen 1, dessen Korb 5, auf dem Fahrgestell 2 ruhend, aus einer horizontalen Gebrauchslage in eine nach oben geschwenkte Nichtgebrauchslage (strichpunktiert gezeichnet) und umgekehrt verschwenkbar ist. An der Stirnseite 8 des Korbes 5 ist ein Fach 14 vorgesehen, dessen vorderste obere Begrenzung nach oben mit wenigstens einem bügelartigen Anschlagmittel 17 abschließt, das über den oberen Korbrand 6 nach oben hinausragt. Im Bereich der beiden Seitenwände 11 des Korbes 5 sind auf dem Korbrand 6 weitere kleine kugel- oder stiftförmige Anschlagmittel 17 aufgesetzt, die von unten her in den beispielsweise mit Rippen oder Vertiefungen ausgestatteten Boden 20, vgl. Fig. 5, eines auf den Korbrand 6 aufgesetzten Tragbehälters 18 eingreifen und damit ein Verrutschen oder Verschieben des Tragbehälters 18 verhindern.

Fig. 4 zeigt einen aus Kunststoff gefertigten zusammenklappbaren Tragbehälter 18, der in Gebrauchslage dargestellt ist. Ein derartiger Tragbehälter 18 ist z.B. unter dem Namen "Snap-Box" der Fa. Rubbermaid bekannt und im Handel erhältlich, so daß auf dessen nähere Beschreibung verzichtet werden kann. Allerdings weist der im Beispiel vorgestellte Tragbehälter 18 an seiner Unterseite 19 vier an je einem Eck befindliche, nach unten ragende fußartige Vorsprünge 24 auf. Die Vorsprünge 24 erfüllen zwei Funktionen. Erstens dienen sie als Füße zum Abstellen des Tragbehälters 18 auf einer ebenen Fläche. Zweitens bilden die Vorsprünge 24 Anschlagmittel 17, die mit den Seitenwänden 11, vgl. Fig. 1 und 2, und erforderlichenfalls auch mit der Stirnseite 8 eines Korbes 5 dann zusammenwirken, wenn der Tragbehälter 18 auf den oberen Korbrand 6 gestellt wird, siehe auch Beschreibung zu Fig. 5.

In Fig. 5 ist ein Tragbehälter 18 dargestellt, bei dem in wenigstens zwei Seitenwänden 21 anstelle von Vorsprüngen 24, von unten nach oben gerichtete Einschnitte 25 oder Vertiefungen vorgesehen sind, welche zum teilweisen Umfassen des oberen Korbrandes 6 bestimmt sind. Derartige Einschnitte 25 können in gleicher Weise an der Unterseite 19 des Tragbehälters 18, an dessen Boden 20 also, angeordnet sein. Die Einschnitte 25 bilden ebenfalls Anschlagmittel 17, die dann mit den Seitenwänden 11, erforderlichenfalls auch mit der Stirnseite 8 des Korbes 5 zusammenwirken, wenn der Tragbehälter 18 in Gebrauchslage auf dem oberen Korbrand 6 abgestellt wird, siehe auch Fig. 3 und 6.

In der Darstellung nach Fig. 6 ist die Wirkungsweise und zweckmäßige Anordnung der vorsprungartigen Anschlagmittel 17 der Tragbehälter 18 deutlich erkennbar. In der Draufsicht ist die Kontur des oberen Korbrandes 6 mit der Schiebeeinrichtung 4 dargestellt. Der Korb 5 besitzt in bekannter Weise von oben betrachtet konische Gestalt, d.h., seine beiden Seitenwände 11 sind in Schieberichtung sich einander nähernd angeordnet. Auf dem oberen Korbrand 6 sind zwei Tragbehälter 18 aufgesetzt. Sie stützen sich in Schieberichtung des Einkaufswagens am Anschlagmittel 17 ab. Die Anordnung der nach unten gerichteten Anschlagmittel 17 der Tragbehälter 18 ist so gewählt, daß wenigstens zwei der jeweils vier Anschlagmittel 17 eines Tragbehälters 18 sehr nahe am oberen Korbrand 6, also an den beiden Seitenwänden 11 des Korbes 5 angeordnet sind. Die Anschlagmittel 17 ragen nach unten über den oberen Korbrand 6 hinaus. Die Tragbehälter 18 lassen sich somit nur geringfügig seitlich verschieben. Sie sind gegen Herabfallen deshalb gesichert, weil sie mit ihren Anschlagmitteln 17 an den Seitenwänden 11 des Korbes 5, bei entsprechender Anordnung der Anschlagmittel 17 auch an der Stirnseite 8 anliegen. Auf das an der Stirnseite 8 des Korbes 5 befindliche Anschlagmittel 17 kann z.B. verzichtet werden, wenn die zuvorderst oder stirnseitig angeordneten Anschlagmittel 17 eines Tragbehälters 18 innerhalb des Grundrisses des Korbes 5 angeordnet sind. Diese beiden Anschlagmittel 17 des Tragbehälters 18 stützen sich dann sowohl an der Innenwand 10 der Stirnseite 8, als auch an der Innen- oder Außenseite 12, 12a der Seitenwände 11 ab, während die Unterseite 19, (Fig. 5), des Tragbehälters 18 auf dem oberen Korbrand 6 aufliegt.

Gemäß der Lösung nach Fig. 7 wird alternativ das gleiche Ergebnis dann erzielt, wenn in wenigstens zwei gegenüberliegenden Seitenwänden 21 eines Tragbehälters 18 oder in dessen Boden 20 von unten nach oben gerichtete Einschnitte 25 oder Vertiefungen vorgesehen sind, die zum Umfassen des oberen Korbrandes 6 im Bereich der Seitenwände 11 des Korbes 5 bestimmt sind. In der Zeichnung erkennt man die in die Einschnitte 25 eingefügten Abschnitte 7 des Korbrandes 6 im Bereich der Seitenwände 11. Man erkennt ferner in der Darstellung, daß der zwischen den beiden Einschnitten 25 befindliche Abschnitt der vordersten der Wände 21 des Tragbehälters 18 unterhalb des oberen Korbrandes 6 im Bereich der Stirnseite 8 des Korbes 5 angeordnet ist. Der Tragbehälter 18 stützt sich somit auf dem oberen Korbrand 6 mit seinen Einschnitten 25 sowohl nach unten, zu den Seiten und an der Stirnseite 8 des Korbes 5 ab. Auf Anschlagmittel 17 am Korb 5 kann in diesem Falle verzichtet werden. Die als Vertiefungen 25 gestalteten Anschlagmittel 17 verhindern ein Herabfallen des oder der Tragbehälter 18 vom Korb 5. Ebenfalls mit Blick auf die Stirnseite 8 des Korbes 5 zeigt Fig. 8 einen auf den oberen Korbrand 6 aufgesetzten Tragbehälter 18, der mit wenigstens zwei nach unten ragenden, um je eine horizontale Achse 26 verschwenkbar gelagerten, vorsprungartigen Anschlagmitteln 17 ausgestattet ist. Die Anschlagmittel 17 befinden sich nahe der Seitenwände 11 des Korbes 5 und ragen nach unten über die obere Begrenzung 6 des Korbes 5 hinaus. Die Anschlagmittel 17 lassen sich nach oben in eine horizontale Lage verschwenken, in der sie beispielsweise in je eine an der Unterseite des Bodens 20 angeordnete Nut oder Vertiefung 27 eingefügt sind. Die Lage der Achsen 26 der Anschlagmittel 17 kann in Bezug zur unteren Begrenzung der Anschlagmittel 17 so gewählt sein, daß sich die ausgeklappten Anschlagmittel 17 entweder zusätzlich als Stellfüße für den Tragbehälter 18 oder sich nur als reine Anschläge eignen, die von selbst in die Vertiefungen 27 schwenken, wenn man den Tragbehälter 18 auf eine Ebene stellt. In letzterem Falle würde das rechts in der Zeichnung dargestellte Anschlagmittel 17 linksdrehend und das links dargestellte Anschlagmittel 17 rechtsdrehend in eine horizontale Nichtgebrauchslage schwenken.

Die Beispiele gemäß den Figuren 7 und 8 zeigen, daß bei entsprechender Gestaltung der Tragbehälter 18 auf am Korb 5 angeordnete Anschlagmittel 17 auch ganz verzichtet werden kann.

Ebenso zeigt das Beispiel nach Fig. 3, daß nicht immer Anschlagmittel 17 am Tragbehälter 18 vorgesehen sein müssen. Wenn z.B. die Unterseite des Bodens 20 des Tragbehälters 18 ohnehin in bekannter Weise Verrippungen aufweist, können diese Verrippungen dazu genutzt werden, daß auf dem Korbrand 6 vorgesehene Anschlagmittel 17 dornartig in die durch die Verrippungen gebildeten Zwischenräume eingreifen können.

Aufgrund der Bauweise bekannter Einkaufswagen 1 und bedingt durch den rechteckigen Grundriß der Tragbehälter 18 wird man die Tragbehälter 18 immer schmalseitig voraus in die Fächer 14 einfügen, während man in Gebrauchslage befindliche Tragbehälter 18 im Grunde immer breitseitig, also mit ihrer Längserstreckung quer zur Schieberichtung des Einkaufswagens 1 angeordnet, auf den oberen Korbrand 6 aufsetzen wird. Die Länge der gewöhnlich rechteckigen Tragbehälter 18 ist bevorzugt größer, als die Breite des Korbes 5 der Einkaufswagen.

**Patentansprüche**

1. Einrichtung zum Einkaufen von Ware in Selbstbedienungsgeschäften, bestehend aus einem mit mindestens einem Korb ausgestatteten Einkaufswagen und aus wenigstens einem Tragbehälter, der dem Kunden gehört, und den der Kunde zum Einkaufen mitbringt, am Einkauswagen bevorzugt in Nichtgebrauchslage abstellt und nach dem Einkaufen mit Ware gefüllt nach Hause nimmt und wobei am Einkaufswagen ein Abstellbereich zum Abstellen und Transportieren des wenigstens einen, nach dem Einkaufsvorgang mit Ware gefüllten Tragbehälters vorgesehen ist, dadurch **gekennzeichnet**, daß der Abstellbereich (28) durch einen Teil des oberen Korbrandes (6) gebildet ist und daß Anschlagmittel (17) entweder am Korb (5) und/oder am wenigstens einen Tragbehälter (18) zum verschiebesicheren Abstellen des wenigstens einen Tragbehälters (18) vorgesehen sind.

2. Einrichtung nach Anspruch 1, dadurch **gekennzeichnet**, daß an der Stirnseite (8) des Korbes (5) wenigstens ein über die Stirnseite (8) nach oben hinausragendes, ortsfestes oder bewegliches Anschlagmittel (17) angeordnet ist.

3. Einrichtung nach Anspruch 1 und/oder 2, dadurch **gekennzeichnet**, daß auf dem oberen Korbrand (6) im Bereich der Seitenwände (11) des Korbes (5) nach oben gerichtete ortsfeste Anschlagmittel (17) vorgesehen sind.

4. Einrichtung nach Anspruch 3, dadurch **gekennzeichnet**, daß die auf dem oberen Korbrand (6) befindlichen Anschlagmittel (17) kugel- oder stiftförmige Gestalt aufweisen.

5. Einrichtung nach wenigstens einem der Ansprüche 1 bis 4, dadurch **gekennzeichnet**, daß an der Unterseite (19) der Tragbehälter (18) nach unten ragende, ortsfest angeordnete oder um je eine horizontale Achse (26) begrenzt verdrehbare Anschlagmittel (17) vorgesehen sind.

6. Einrichtung nach wenigstens einem der Ansprüche 1 bis 5, dadurch **gekennzeichnet**, daß die Anschlagmittel (17) der Tragbehälter (18) als Füße gestaltet und zum Abstützen der Tragbehälter (18) außerhalb des Einkaufswagens (1) vorgesehen sind.

7. Einrichtung nach wenigstens einem der Ansprüche 1 bis 6, dadurch **gekennzeichnet**, daß in wenigstens zwei Seitenwänden (21) der Tragbehälter (18) Anschlagmittel (17) (Einschnitte 25) zum Umfassen des oberen Korbrandes (6) angeordnet sind.

8. Einrichtung nach wenigstens einem der Ansprüche 1 bis 7, dadurch **gekennzeichnet**, daß die Anschlagmittel (17) der Tragbehälter (18) zum Anliegen an die Seitenwände (11) und erforderlichenfalls an die Stirnwand (8) des Korbes (5) bestimmt sind.

9. Einrichtung nach wenigstens einem der Ansprüche 1 bis 8, dadurch **gekennzeichnet**, daß der zwischen zwei Anschlagmitteln (17) (Einschnitte 25) befindliche Abschnitt einer der Seitenwände (21) der Tragbehälter (18) zum Anliegen an die Stirnwand (8) des Korbes (5) bestimmt ist.

10. Einrichtung nach wenigstens einem der Ansprüche 1 bis 9, dadurch **gekennzeichnet**, daß die an der Unterseite des Bodens (20) der Tragbehälter (18) befindlichen schwenkbaren Anschlagmittel (17) in am Boden (20) vorhandenen Vertiefungen (27) einfügbar sind.

11. Einrichtung nach wenigstens einem der Ansprüche 1 bis 10, dadurch **gekennzeichnet**, daß an der Stirnseite (8) des Korbes (5) ein Fach (14) zur Aufnahme wenigstens eines in Nichtgebrauchslage befindlichen Tragbehälters (18) vorgesehen ist.

12. Einrichtung nach wenigstens einem der Ansprüche 1 bis 11, dadurch **gekennzeichnet**, daß das Fach (14) eine nach oben oder zur Seite gerichtete Öffnung (16) zum Einführen des wenigstens einen Tragbehälters (18) aufweist.

13. Einrichtung nach wenigstens einem der Ansprüche 1 bis 12, dadurch **gekennzeichnet**, daß das Fach (14) an seiner oberen Begrenzung (15) wenigstens ein nach oben gerichtetes ortsfestes oder begrenzt verschwenkbares Anschlagmittel (17) aufweist.

14. Einrichtung nach wenigstens einem der Ansprüche 1 bis 13, dadurch **gekennzeichnet**, daß der wenigstens eine Tragbehälter (18) mit der Schmalseite voraus in das Fach (14) einfügbar ist.

Fig.1

Fig.2

Fig.4

EP 0 505 743 A2

Fig. 3

Fig. 5

Fig. 6

8

Fig. 7

Fig. 8